# FASCICULE DE BREVET EUROPEEN

(11) **EP 0 817 830 B1**
(45) Date de publication et mention de la délivrance du brevet: **24.10.2001**
(21) Numéro de dépôt: 96909107.3
(22) Date de dépôt: 19.03.1996
(51) Int. Cl.: C11D 3/43, B01D 12/00, F26B 5/00, C23G 5/028

(54) **COMPOSITIONS COMPRENANT UN HYDROFLUOROCARBURE ET PROCEDE D'ELIMINATION D'EAU D'UNE SURFACE SOLIDE**
HYDROFLUORALKANVERBINDUNGEN ENTHALTENDE ZUSAMMENSETZUNGEN UND VERFAHREN ZUR BESEITIGUNG VON WASSER VON EINER HARTEN OBERFLÄCHE
HYDROFLUOROCARBON-CONTAINING COMPOSITIONS AND METHOD FOR REMOVING WATER FROM A SOLID SURFACE

(30) Priorité: 31.03.1995 FR 9503931
(43) Date de publication de la demande: 14.01.1998
(73) Titulaire: SOLVAY (Société Anonyme), 1050 Bruxelles (BE)
(72) Inventeur: BARTHELEMY, Pierre, B-1315 Pietrebais (BE); PAULUS, Mireille, B-1020 Bruxelles (BE); PUTTEMAN, Robert, B-9370 Lebbeke (BE)
(74) Mandataire: Jacques, Philippe
(86) Numéro de dépôt international: EP9601232
(87) Numéro de publication internationale: WO9630487

(56) Documents cités:
- FR-A- 2 217 045
- US-A- 4 763 423
- DATABASE WPI Section Ch, Week 9331 Derwent Publications Ltd., London, GB; Class E19, AN 93-247650 XP002009620 & JP,A,05 168 805 ( ASAHI GLASS CO LTD) , 2 Juillet 1993 cité dans la demande
- DATABASE WPI Section Ch, Week 9445 Derwent Publications Ltd., London, GB; Class E13, AN 94-365095 XP002009621 & SU,A,1 825 367 ( SINTEZPAV SCI PRDN ASSOC) , 30 Juin 1993
- DATABASE WPI Section Ch, Week 9139 Derwent Publications Ltd., London, GB; Class E13, AN 91-283994 XP002009622 & JP,A,03 186 305 ( TOA GOSEI CHEM IND LTD) , 14 Août 1991

## Description

La présente invention se rapporte à des compositions à base d'un hydrofluorocarbure et à un procédé d'élimination d'eau d'une surface solide au moyen de ces compositions.

Dans les industries électrique, électronique, optique et mécanique notamment, en particulier au cours de la production de pièces de haute précision, il peut arriver que celles-ci entrent, intentionnellement ou non, en contact avec de l'eau ou de l'humidité. L'eau risque d'adhérer à la surface de ces pièces et de provoquer ensuite certains effets néfastes au cours d'étapes ultérieures de leur mise en oeuvre ou altérer leur qualité. Il est dès lors indispensable, pour de nombreuses pièces de précision, d'être complètement débarrassées de l'eau adhérant à leur surface. Cette opération d'élimination d'eau de la surface peut notamment être réalisée par déplacement de l'eau, au moyen d'un liquide organique dense, non miscible à l'eau et contenant éventuellement un agent tensioactif.

De nombreuses compositions à base d'hydrofluorocarbures pour l'élimination d'eau par déplacement de celle-ci ont déjà été proposées, notamment des compositions à base de 1,1,1,3,3-pentafluorobutane. En particulier, dans la demande de brevet JP-A-05/168805, on décrit des compositions constituées de 1,1,1,3,3-pentafluorobutane, d'un solvant soluble dans le 1,1,1,3,3-pentafluorobutane et d'un agent tensioactif, sélectionné parmi les sels dérivés d'acides monocarboxyliques aliphatiques gras et de monoamines aliphatiques grasses.

Lorsqu'on utilise ces compositions connues pour éliminer de l'eau d'une surface solide, de très petites gouttelettes d'eau sont néanmoins souvent retenues à la surface. De plus, de telles compositions forment parfois des émulsions avec l'eau, ce qui rend difficile la séparation ultérieure de la composition et de l'eau déplacée. Ces compositions s'épuisent parfois très vite, de sorte qu'après quelques cycles d'utilisation pour l'élimination de l'eau de la surface de pièces, elles perdent toute leur efficacité.

Des compositions qui évitent cet inconvénient comprennent du 1,1-dichloro-1-fluoroéthane et une imidazoline (demande de brevet français 94.06237). Le 1,1-dichloro-1-fluoroéthane présente toutefois un potentiel de destruction de l'ozone (ODP) non nul.

Il est cependant exclu de substituer le 1,1,1,3,3-pentafluorobutane tel quel au 1,1-dichloro-1-fluoroéthane, car les imidazolines sont généralement insolubles dans le 1,1,1,3,3-pentafluorobutane.

On a maintenant trouvé un moyen de solubiliser les imidazolines dans le 1,1,1,3,3-pentafluorobutane et, de manière plus générale, dans les hydrofluorocarbures, lesquels présentent un potentiel de destruction de l'ozone nul, permettant ainsi d'obtenir des compositions présentant une bonne aptitude à l'élimination d'eau de surfaces solides, sans présenter les inconvénients sus-mentionnés des compositions connues.

L'invention concerne dès lors des compositions comprenant un hydrofluorocarbure en C3-C10, un co-solvant et au moins une imidazoline à titre d'agent tensioactif.

Par hydrofluorocarbure en C3-C10, on entend désigner les hydrocarbures saturés, aliphatiques ou alicycliques, comprenant de 3 à 10 atomes de carbone, au moins un atome de fluor et au moins un atome d'hydrogène. En particulier, des hydrofluorocarbures utilisables dans les compositions selon l'invention sont les hydrofluoroalcanes de formule générale CₐH_{b}F_{c}, dans laquelle a est un nombre entier de 3 à 8, b est un nombre entier de 1 à (a+2) et c est un nombre entier de a à (2a+1). Les hydrofluoroalcanes tels que définis ci-dessus, contenant de 4 à 6 atomes de carbone sont préférés. A titre d'exemple, l'hydrofluoroalcane des compositions selon l'invention peut être sélectionné parmi les composés de formule brute C₄H₅F₅, C₄H₄F₆ et C₅H₂F₁₀, comme le 1,1,1,3,3-pentafluorobutane (HFC-365mfc), le 1,1,1,2,2,4-hexafluorobutane (HFC-356mcf) et le 1,1,1,2,2,3,4,6,6,6-décafluoropentane (HFC-4310mee). Le 1,1,1,3,3-pentafluorobutane convient très bien. Les compositions selon l'invention peuvent également contenir des mélanges d'hydrofluorocarbures.

Par co-solvant, on entend désigner un composé organique, ou un mélange de plusieurs composés organiques, miscible avec l'hydrofluorocarbure dans des proportions pondérales de 1:100 à 1:1 et dans lequel l'imidazoline présente une solubilité d'au moins environ 0,002 % en poids.

Des co-solvants utilisables dans les compositions selon l'invention comprennent les alcanes en C5-C10, les cycloalcanes en C5-C10, les alcools en C1-C10 (par exemple le méthanol, l'éthanol, le propanol, l'isopropanol et le décanol), les cétones en C3-C8 (par exemple l'acétone, la méthyléthylcétone, la méthylbutylcétone et la diéthylcétone), les esters en C2-C8 (par exemple, le formiate de méthyle, le formiate d'éthyle, l'acétate de méthyle et l'acétate d'éthyle), les éthers en C2-C8 (par exemple le diéthyléther, le méthyléthyléther, le tétrahydrofurane et le 1,4-dioxane), les hydrocarbures chlorés en C1-C3 (par exemple le dichlorométhane, le 1,2-dichloroéthylène-trans et le 1,2-dichloroéthylène-cis) et les hydrocarbures chlorofluorés en C2-C4 (par exemple le 1,1-dichloro-1-fluoroéthane).

Par imidazoline, on entend désigner tout composé organique comprenant une structure

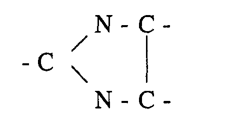

Selon une forme de réalisation préférée des compositions selon l'invention, l'imidazoline répond à la formule 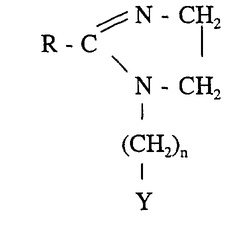 dans laquelle R représente une chaîne alkyle ou alcènyle contenant au moins 2 atomes de carbone, Y représente un groupement hydroxyle ou amino et n est un nombre entier au moins égal à 1. Dans cette forme de réalisation préférée des compositions selon l'invention, le nombre d'atomes de carbone dans la chaîne alkyle ou alcènyle R ne dépasse pas en général 25, de préférence 20. Les imidazolines dans lesquelles R est une chaîne alkyle ou alcènyle comprenant au moins 6, de préférence au moins 10, atomes de carbone sont particulièrement préférées. Tout particulièrement préférées sont les imidazolines dans lesquelles R comprend 11 ou 17 atomes de carbone. Dans cette forme de réalisation préférée des compositions selon l'invention, le nombre entier n ne dépasse pas en général 20, de préférence 12. Les imidazolines dans lesquelles n est égal à 2 sont particulièrement préférées. Les imidazolines dans lesquelles R comprend 11 ou 17 atomes de carbone et n est égal à 2 sont particulièrement avantageuses, particulièrement celles dans lesquelles R comprend 17 atomes de carbone, n est égal à 2 et Y est un groupement amino.

L'imidazoline utilisée dans les compositions selon l'invention, peut être sous la forme de base libre ou sous la forme de sel mono- ou dicarboxylate. Dans le cas où l'imidazoline est sous la forme de sel mono- ou dicarboxylate, la partie carboxylate est de préférence dérivée d'un acide gras, saturé ou insaturé, contenant de 4 à 22 atomes de carbone. De bons résultats ont été obtenus avec les oléates et les laurates. Selon une forme de réalisation avantageuse des compositions selon l'invention, l'imidazoline est sous la forme de base libre ou sous la forme de sel monocarboxylate.

Des imidazolines utilisables dans cette forme de réalisation des compositions selon l'invention, sont bien connues, et peuvent notamment être synthétisées par réaction, à haute température, d'acides gras, saturés ou insaturés, répondant à la formule RCOOH, avec des éthylènediamines substituées de formule NH₂-CH₂-CH₂-NH-(CH₂)ₙ-Y. On les trouve également dans le commerce, notamment sous les noms de SERVAMIN® KOO 360 et SERVAMIN® KOO 330 (vendus par la firme SERVO), de IMIDAZOLINE 18NH, IMIDAZOUNE 180H, IMIDAZOLINE 12NH et IMIDAZOLINE 120H (vendus par la firme LAKELAND) et de MIRAMINE® HDO (vendu par la firme RHONE-POULENC).

Dans les compositions selon l'invention, la teneur en hydrofluorocarbure est avantageusement au moins égale à 50 %, de préférence au moins égale à 60 %, du poids total de la composition. La teneur en hydrofluorocarbure n'excède pas généralement 97,5 %, de préférence 95 % et de manière particulièrement préférée 90 % du poids total de la composition.

Dans les compositions selon l'invention, la teneur en co-solvant est avantageusement au moins égale à 2 %, de préférence au moins égale à 4 %, et de manière particulièrement préférée au moins égale à 10 %, du poids total de la composition. La teneur en co-solvant n'excède pas généralement 49 %, de préférence 39 % et de manière particulièrement préférée 35 %, du poids total de la composition.

Dans les compositions selon l'invention, la teneur en imidazoline est avantageusement au moins égale à 0,001 %, de préférence au moins égale à 0,01 %, du poids total de la composition. La teneur en imidazoline n'excède pas généralement 5 %, de préférence 1 %, du poids total de la composition.

Les compositions selon l'invention peuvent contenir, en plus de l'hydrofluorocarbure, du co-solvant et de l'agent tensioactif, des additifs permettant d'améliorer les performances des compositions lors de leur utilisation, tels que des stabilisants, des désémulsionnants et/ou des anti-mousses.

Dans les compositions de l'invention, l'agent tensioactif peut contenir, en plus de l'imidazoline, un ou plusieurs autres agents tensioactifs.

Les compositions renfermant un azéotrope entre l'hydrofluorocarbure et le co-solvant sont préférées. A titre d'exemples de telles compositions, on peut citer les compositions renfermant du 1,1,1,3,3-pentafluorobutane avec du méthanol, de l'éthanol, du dichlorométhane et/ou du 1,2-dichloroéthylène-trans.

Les compositions constituées essentiellement de 1,1,1,3,3-pentafluorobutane, de 1,2-dichloroéthylène-trans et d'au moins une imidazoline sont particulièrement préférées. De telles compositions sont, par exemple, celles de la revendication 9, qui contiennent 70 parts en poids de 1,1,1,3,3-pentafluorobutane, 30 parts en poids de 1,2-dichloroéthylène-trans et 0,2 part en poids d'imidazoline.

Les compositions selon l'invention sont des compositions liquides qui sont particulièrement bien adaptées pour déplacer de l'eau de surfaces solides. Elles satisfont en effet aux critères les plus sévères applicables aux compositions utilisées pour éliminer de l'eau de surfaces solides, par déplacement de celle-ci. Ainsi, elles sont particulièrement efficaces pour déplacer plus de 70 %, généralement au moins 95 %, voire la totalité de l'eau présente sur une surface solide. Le déplacement de l'eau est très rapide. Dans cette application, les compositions selon l'invention présentent l'avantage qu'elles ne forment pas d'émulsion avec l'eau, mais favorisent au contraire la formation de deux phases superposées, dont l'une (la phase inférieure) est constituée essentiellement par la composition selon l'invention dans laquelle un peu d'eau peut éventuellement être dissoute et dont l'autre (la phase supérieure) est constituée essentiellement par l'eau déplacée. Cela permet une séparation ultérieure simple entre l'eau déplacée et la composition. Les compositions selon l'invention présentent l'avantage supplémentaire qu'elles se prêtent à un grand nombre d'utilisations successives, sans que leur constitution subisse une modification sensible. Le co-solvant et l'agent tensioactif ne sont en effet pas extraits significativement des compositions par l'eau qui est déplacée et séparée ultérieurement de celles-ci.

Les compositions selon l'invention conviennent pour le séchage d'une grande variété de matériaux différents. Elles conviennent notamment pour le séchage de pièces ou de matériaux en métal, en verre, en céramique, en pierres précieuses ou en plastique.

L'invention concerne dès lors également un procédé d'élimination d'eau d'une surface solide, qui se caractérise en ce qu'on traite la surface avec une composition selon l'invention.

Pour traiter la surface solide avec la composition selon l'invention, on peut par exemple la soumettre à une pulvérisation, à une aspersion, à un badigeonnage par la composition ou à une immersion dans un bain de la composition. Selon une forme de réalisation préférée du procédé selon l'invention, on traite la surface solide par immersion dans un bain de la composition. Dans ce cas, le bain est, d'une manière particulièrement préférée, à l'ébullition.

Les exemples non limitatifs qui suivent sont donnés à titre d'illustration.

### Exemple 1

Une composition selon l'invention a été préparée en mélangeant 70 parts en poids de 1,1,1,3,3-pentafluorobutane et 30 parts en poids de 1,2-dichloroéthylène-trans, proportions dans lesquelles ces composés forme un azéotrope, puis en rajoutant 0,2 part en poids d'imidazoline SERVAMIN® KOO 330. On a observé que l'imidazoline se dissout quasi totalement dans le mélange azéotropique de 1,1,1,3,3-pentafluorobutane et de 1,2-dichloroéthylène-trans.

### Exemple 2 (comparaison)

On a mélangé 100 parts en poids de 1,1,1,3,3-pentafluorobutane et 0,2 part en poids d'imidazoline SERVAMIN® KOO 330. Aucune dissolution de l'imidazoline dans le 1,1,1,3,3-pentafluorobutane n'a été observée.

La comparaison des exemples 1 et 2 démontre que l'imidazoline est solubilisée dans les compositions selon l'invention comprenant du 1,2-dichloroéthylène-trans en tant que co-solvant, alors qu'elle est insoluble dans le 1,1,1,3,3-pentafluorobutane seul.

## Revendications

1. Compositions comprenant un hydrofluorocarbure en C3-C10, au moins une imidazoline à titre d'agent tensioactif et, à titre de co-solvant, un composé organique ou un mélange de plusieurs composés organiques, miscible avec l'hydrofluorocarbure dans des propositions pondérales co-solvant: hydrofluorocarbure de 1:100 à 1:1, co-solvant dans lequel l'imidazoline présente une solubilité d'au moins 0,002 % en poids .

2. Compositions selon la revendication 1, dans lesquelles l'hydrofluorocarbure est un hydrofluoroalcane de formule générale CₐH_{b}F_{c}, dans laquelle a est un nombre entier de 3 à 8, b est un nombre entier de 1 à (a+2) et c est un nombre entier de a à (2a+1).

3. Compositions selon la revendication 2, dans lesquelles l'hydrofluoroalcane contient de 4 à 6 atomes de carbone.

4. Compositions selon une quelconque des revendications 1 à 3, dans lesquelles le co-solvant est sélectionné parmi les alcanes en C5-C10, les cycloalcanes en C5-C10, les alcools en C1-C10, les cétones en C3-C8, les esters en C2-C8, les éthers en C2-C8, les hydrocarbures chlorés en C1-C3 et les hydrocarbures chlorofluorés en C2-C4.

5. Compositions selon l'une quelconque des revendications 1 à 4, dans lesquelles l'imidazoline répond à la formule 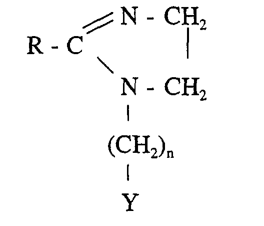 dans laquelle R représente une chaîne alkyle ou alcènyle contenant au moins 2 atomes de carbone, Y représente un groupement hydroxyle ou amino et n est un nombre entier au moins égal à 1.

6. Compositions selon l'une quelconque des revendications 1 à 5, contenant, par rapport au poids total de la composition, de 50 à 97,5 % d'hydrofluorocarbure, de 2 à 49 % de co-solvant et de 0,001 à 5 % d'imidazoline.

7. Compositions selon l'une quelconque des revendications 1 à 6, contenant, par rapport au poids total de la composition, de 60 à 95 % d'hydrofluorocarbure, de 4 à 39 % de co-solvant et de 0,01 à 1 % d'imidazoline.

8. Compositions selon l'une quelconque des revendications 1 à 7, constituées essentiellement de 1,1,1,3,3-pentafluorobutane, de 1,2-dichloroéthylène-trans et d'au moins une imidazoline.

9. Compositions selon la revendication 8, contenant 70 parts en poids de 1,1,1,3,3-pentafluorobutane, 30 parts en poids de 1,2-dichloroéthylène-trans et 0,2 part en poids d'imidazoline.

10. Procédé d'élimination d'eau d'une surface solide, **caractérisé en ce qu'**on traite la surface avec une composition selon l'une quelconque des revendications 1 à 9.

## Patentansprüche

1. Zusammensetzungen, umfassend einen C3-C10-Fluorkohlenwasserstoff, mindestens ein Imidazolin als oberflächenaktives Mittel und, als Co-Solvens, eine organische Verbindung oder eine Mischung mehrerer organischer Verbindungen, die mit dem Fluorkohlenwasserstoff in einem Gewichtsverhältnis Co-Solvens:Fluorkohlenwasserstoff von 1:100 bis 1:1 mischbar ist, wobei das Imidazolin in dem Co-Solvens eine Löslichkeit von mindestens 0,002 Gew.-% aufweist.

2. Zusammensetzungen nach Anspruch 1, worin der Fluorkohlenwasserstoff ein Fluorwasserstoffalkan der allgemeinen Formel CₐH_{b}F_{c} ist, wobei a eine ganze Zahl von 3 bis 8, b eine ganze Zahl von 1 bis (a+2) ist und c eine ganze Zahl von a bis (2a+1) ist.

3. Zusammensetzungen nach Anspruch 2, worin das Fluorwasserstoffalkan 4 bis 6 Kohlenstoffatome enthält.

4. Zusammensetzungen nach einem der Ansprüche 1-3, worin das Co-Solvens ausgewählt ist aus C5-C10-Alkanen, C5-C10-Cycloalkanen, C1-C10-Alkoholen, C3-C8-Ketonen, C2-C8-Estem, C2-C8-Ethem, C1-C3-Chlorkohlenwasserstoffen und C2-C4-Fluorchlorkohlenwasserstoffen.

5. Zusammensetzungen nach einem der Ansprüche 1-4, worin das Imidazolin eine Formel 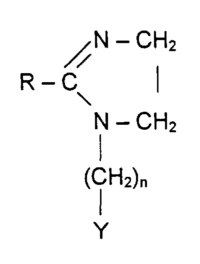 aufweist, worin R eine Alkyl- oder Alkenylkette darstellt, die mindestens zwei Kohlenstoffatome enthält, Y eine Hydroxyl- oder Aminogruppe darstellt und n eine ganze Zahl von mindestens gleich 1 ist.

6. Zusammensetzungen nach einem der Ansprüche 1-5, enthaltend, bezogen auf das Gesamtgewicht der Zusammensetzung, 50 bis 97,5% Fluorkohlenwasserstoff, 2 bis 49% Co-Solvens und 0,001 bis 5% Imidazolin.

7. Zusammensetzungen nach einem der Ansprüche 1-6, enthaltend, bezogen auf das Gesamtgewicht der Zusammensetzung, 60 bis 95% Fluorkohlenwasserstoff, 4 bis 39% Co-Solvens und 0,01 bis 1% Imidazolin.

8. Zusammensetzungen nach einem der Ansprüche 1-7, im wesentlichen bestehend aus 1,1,1,3,3-Pentafluorbutan, trans-1,2-Dichlorethylen und mindestens einem Imidazolin.

9. Zusammensetzungen nach Anspruch 8, enthaltend 70 Gewichtsteile 1,1,1,3,3-Pentafluorbutan, 30 Gewichtsteile trans-1,2-Dichlorethylen und 0,2 Gewichtsteile Imidazolin.

10. Verfahren zum Entfernen von Wasser von einer festen Oberfläche, **dadurch gekennzeichnet, daß** man die Oberfläche mit einer Zusammensetzung nach einem der Ansprüche 1-9 behandelt.

## Claims

1. Compositions comprising a C₃-C₁₀ hydrofluorocarbon, at least one imidazoline as surface active agent and as cosolvent, an organic compound or a mixture of several organic compounds which is miscible with the hydrofluorocarbon in proportions by weight from 1:100 to 1:1 and in which the imidazoline exhibits a solubility of at least 0,002 % by weight.

2. Compositions according to Claim 1, in which the hydrofluorocarbon is a hydrofluoroalkane of general formula CₐH_{b}F_{c}, in which a is an integer from 3 to 8, b is an integer from 1 to (a + 2) and c is an integer from a to (2a + 1).

3. Compositions according to Claim 2, in which the hydrofluoroalkane contains from 4 to 6 carbon atoms.

4. Compositions according to any one of Claims 1 to 3, in which the cosolvent is selected from C₅-C₁₀ alkanes, C₅-C₁₀ cycloalkanes, C₁-C₁₀ alcohols, C₃-C₈ ketones, C₂-C₈ esters, C₂-C₈ ethers, C₁-C₃ chlorinated hydrocarbons and C₂-C₄ chlorofluorinated hydrocarbons.

5. Compositions according to any one of Claims 1 to 4, in which the imidazoline corresponds to the formula 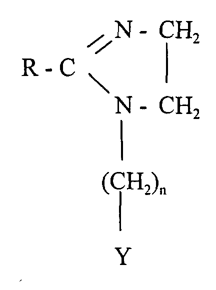 in which R represents an alkyl or alkenyl chain, Y represents a hydroxyl or amino group and n is an integer equal to at least 1.

6. Compositions according to any one of Claims 1 to 5, containing, with respect to the total weight of the composition, from 50 to 97.5% of hydrofluorocarbon, from 2 to 49% of cosolvent and from 0.001 to 5% of imidazoline.

7. Compositions according to any one of Claims 1 to 6, containing, with respect to the total weight of the composition, from 60 to 95% of hydrofluorocarbon, from 4 to 39% of cosolvent and from 0.01 to 1% of imidazoline.

8. Compositions according to any one of Claims 1 to 7, composed essentially of 1,1,1,3,3-pentafluorobutane, trans-1,2-dichloroethylene and at least one imidazoline.

9. Compositions according to Claim 8, containing 70 parts by weight of 1,1,1,3,3-pentafluorobutane, 30 parts by weight of trans-1,2-dichloroethylene and 0.2 part by weight of imidazoline.

10. Process for removing water from a solid surface, **characterized in that** the surface is treated with a composition according to any one of Claims 1 to 9.
